# FASCICULE DE BREVET EUROPEEN

(11) **EP 3 240 987 B1**
(45) Date de publication et mention de la délivrance du brevet: **11.12.2019**
(21) Numéro de dépôt: 15820509.6
(22) Date de dépôt: 21.12.2015
(51) Int. Cl.: F28F 5/00, B01D 1/06, C02F 1/04, F16L 27/00, F28F 9/06, F28F 21/06, F28D 7/16, F28D 21/00

(54) **ECHANGEUR DE CHALEUR À GAINES FLEXIBLES**
WÄRMETAUSCHER MIT FLEXIBLEN HÜLSEN
HEAT EXCHANGER WITH FLEXIBLE SLEEVES

(30) Priorité: 30.12.2014 FR 1463462
(43) Date de publication de la demande: 08.11.2017
(73) Titulaire: Commissariat à l'Énergie Atomique et aux Énergies Alternatives, 75015 Paris (FR)
(72) Inventeur: BANDELIER, Philippe, 38240 Meylan (FR)
(74) Mandataire: Hautier, Nicolas
(86) Numéro de dépôt international: PCT/EP2015/080725
(87) Numéro de publication internationale: WO 2016/107774

(56) Documents cités:
- WO-A1-85/04701
- FR-A1- 2 243 386
- FR-A1- 2 621 112

## Description

### DOMAINE TECHNIQUE DE L'INVENTION

L'invention concerne le domaine général des échangeurs de chaleur. Elle trouve pour application avantageuse les échangeurs pour concentrer une solution par évaporation. Un échangeur ayant les caractéristiques du préambule de la revendication 1 est connu de FR 2 243 386.

Un exemple de ce type d'échangeur concerne les évaporateurs-concentrateurs pour eau salée afin d'en extraire de l'eau douce. L'une des applications de l'invention est donc le dessalement de l'eau de mer.

### ÉTAT DE LA TECHNIQUE

Plusieurs solutions existent pour concentrer une solution par évaporation. L'une de ces solutions consiste à prévoir des gaines souples verticales intérieurement traversées par de la vapeur. Cette vapeur se condense à l'intérieur du tube et transfère sa chaleur à un deuxième fluide qui ruisselle sur la paroi externe de la gaine. En recevant de la chaleur, ce deuxième fluide, par exemple de l'eau salée, se vaporise en partie. La vapeur ainsi créée peut être condensée ultérieurement pour former de l'eau douce. La portion de deuxième fluide non évaporée présente une concentration augmentée, par exemple en sel.

De manière connue, les gaines verticales souples sont fixées à leur extrémité supérieure à une plaque supérieure, munie de trous pour permettre l'introduction de la vapeur dans la gaine. Les parties inférieures des gaines sont également fixées à une plaque inférieure munie de trous pour permettre de collecter sous cette plaque inférieure, le liquide condensé à l'intérieur des tubes.

La mise en série de plusieurs étages d'évaporation-concentration à gaines verticales souples, comprenant chacun plusieurs échangeurs et permettant chacun une condensation du premier fluide et une évaporation du second fluide, permet d'obtenir de meilleurs rendements.

Cependant, il existe un besoin important consistant à améliorer ces rendements qui demeurent relativement faibles avec les technologies proposées jusqu'à ce jour.

Un objectif de la présente invention est d'améliorer le rendement d'un échangeur et avantageusement un échangeur à gaines verticales souples.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, un aspect de la présente invention concerne un échangeur de chaleur comprenant au moins :
- une gaine flexible, s'étendant selon un axe principal, de préférence vertical, formée au moins d'un matériau polymère, l'échangeur étant destiné à faire circuler un premier fluide à l'intérieur de la gaine en partie au moins sous forme de vapeur et pour transférer une partie au moins de la chaleur du premier fluide à un deuxième fluide situé au contact d'une paroi externe de la gaine, de préférence s'écoulant sur la paroi externe de la gaine, ce transfert de chaleur produisant de préférence une condensation d'une partie au moins du premier fluide sur la paroi interne de la gaine et une évaporation du deuxième fluide;
- un orifice verticalement situé sous une extrémité inférieure de la gaine et configuré pour récupérer le premier fluide ayant condensé à l'intérieur de la gaine.

L'échangeur comprend un dispositif de connexion fluidique entre la gaine et l'orifice, le dispositif de connexion fluidique comprenant au moins une quille présentant une extrémité supérieure solidaire de l'extrémité inférieure de la gaine ; une extrémité inférieure insérée dans l'orifice; un canal interne s'étendant entre ses extrémités supérieure et inférieure et configuré pour collecter le premier fluide condensé en sortie de gaine et le guider jusque dans l'orifice.

L'échangeur est configuré pour permettre un déplacement relatif entre la quille et l'orifice, selon l'axe d'extension principale de la gaine.

Dans le cadre du développement de la présente invention, il a été remarqué qu'il est en pratique très difficile, voire impossible, d'injecter uniquement de la vapeur d'eau à l'intérieur des gaines. En effet, un évaporateur, et à plus forte raison une installation comportant plusieurs étages d'évaporation-condensation comprenant chacun un faisceau de gaines n'est jamais parfaitement étanche à l'air ambiant.

Par ailleurs, il s'avère que le fluide à évaporer contient de l'air dissout qui dégaze dans l'évaporateur sous l'effet de la baisse de pression et de la température.

Le fluide injecté dans les gaines est donc toujours de la vapeur d'eau additionnée d'une certaine quantité d'air, c'est-à-dire principalement de l'oxygène et de l'azote.

Il s'est avéré que cette quantité de gaz non souhaitée, même introduite en proportions très faibles, peut avoir pour conséquence de baisser considérablement le rendement de l'installation. En effet, ces gaz non condensables, au fur et à mesure de leur introduction dans une gaine, s'accumulent dans cette gaine. Ils ne peuvent pas s'en échapper et peuvent alors former dans la gaine un bouchon gazeux bloquant ou tout au moins ralentissant l'ensemble du cycle d'évaporation-condensation. Ce phénomène est d'autant plus préjudiciable qu'il a un nombre élevé de gaines.

Le rendement de l'échange de chaleur et de l'évaporation peut donc diminuer fortement.

L'invention en prévoyant un passage de fuite empêche l'accumulation de gaz condensable et prévient ainsi la formation de bouchon. Le rendement de l'installation est donc bien plus stable.

L'invention prévoit ainsi de créer une fuite calibrée de vapeur de chauffe vers le circuit saumure de manière à balayer convenablement les gaz incondensables, gaine par gaine.

Par ailleurs, l'invention permet ce passage de fuite à la fois tout en empêchant que la solution à distiller ne parvienne à l'eau condensée et à la fois tout en permettant une libre dilatation de la gaine, puisqu'un déplacement relatif entre la quille et l'orifice est permis.

Ces avantages sont d'autant plus appréciables que les gaines sont en polymère, matériau qui présente un coefficient de dilatation bien plus élevé que les métaux et notamment que le cuivre ou les aciers inoxydables, métaux fréquemment utilisés dans certaines solutions connues pour fabriquer des tubes.

Par rapport aux métaux, les gaines en polymère présentent comme avantage, outre leur coût, d'être bien plus résistantes aux attaques chimiques de la solution à distiller. L'évaporateur selon l'invention présente ainsi une durée de vie augmentée.

Cet échangeur est particulièrement bien adapté aux températures de fonctionnement basses, typiquement inférieures à 80°C.

Par ailleurs l'invention permet une libre dilatation de chacune des gaines, de manière individuelle, sans remettre en cause les différentes fonctions notamment de conduction du condensat, d'étanchéité entre les premier et deuxième fluides à l'état liquide, et ceci quand bien même la dilatation est importante, par exemple de plusieurs pourcents.

Selon un mode de réalisation particulièrement avantageux, le dispositif de connexion fluidique comprend une bague rapportée sur une pièce prise parmi la quille et le tube, la bague étant configurée pour définir avec l'autre parmi la quille et le tube un passage de fuite pour l'évacuation d'une partie du premier fluide non condensé provenant de l'extrémité inférieure de la quille.

Ainsi, la bague détermine la section de passage de la fuite. En choisissant pour un échangeur donné une bague de dimension appropriée, on peut ainsi adapter la section du passage de fuite. Il suffit ainsi de disposer d'un jeu de bagues de différents diamètres extérieurs ou intérieurs pour adapter le débit de fuite afin que ce dernier soit suffisant pour l'évacuation des gaz non condensables, tout en étant suffisamment faible pour ne pas pénaliser le rendement de l'installation.

Selon un autre mode de réalisation, l'invention porte sur un échangeur de chaleur comprenant au moins :
- une gaine flexible, s'étendant selon un axe principal, de préférence vertical, formée d'au moins un matériau polymère, l'échangeur étant destiné à faire circuler un premier fluide à l'intérieur de la gaine et pour transférer une partie au moins de la chaleur du premier fluide à un deuxième fluide situé au contact d'une paroi externe de la gaine ;
- une quille présentant une extrémité supérieure insérée dans une extrémité inférieure de la gaine, solidaire de l'extrémité inférieure de la gaine et un canal interne configuré pour guider hors de la gaine le premier fluide condensé;
- un tube présentant une extrémité supérieure à l'intérieure de laquelle est insérée une extrémité inférieure de la quille et configuré pour récupérer le premier fluide condensé en sortie de quille, l'échangeur étant configuré pour permettre un déplacement relatif entre la quille et le tube, de préférence selon l'axe d'extension de la gaine.

L'échangeur est configuré de manière à définir un passage de fuite entre le tube et la quille pour l'évacuation d'une partie du premier fluide non condensé.

Plus précisément ce passage de fuite est un passage entre une paroi interne du tube et une paroi externe de la quille.

De manière optionnelle et avantageuse, le dispositif de connexion est configuré de manière à serrer la gaine sur une paroi externe de la tête de la quille de manière à assurer la retenue de la quille sur la gaine.

Ainsi la fixation de la quille est simple et fiable, évitant les risques de détachement de la quille.

De manière optionnelle et avantageuse, le dispositif de connexion fluidique comprend une jupe présentant un passage intérieur et une extrémité supérieure qui coiffe à la fois l'extrémité inférieure de la gaine et l'extrémité supérieure de la quille.

La quille et la jupe sont conformées pour coopérer afin de pincer la gaine entre une paroi interne du passage intérieur de la jupe et une paroi externe de la quille de manière à bloquer la quille et la jupe sur la gaine.

De préférence, la quille et la jupe sont conformées de sorte qu'une translation relative de la jupe par rapport à la quille provoque un pincement de la gaine entre une paroi interne du passage intérieur de la jupe et une paroi externe de la quille de manière à bloquer la quille et la jupe sur la gaine.

Ce dispositif de connexion permet ainsi une évacuation efficace du condensat formé à l'intérieur des gaines vers une boite de collecte, sans que celui-ci puisse s'échapper du côté où la pression est inférieure. Notamment, la présence de la jupe évite que le deuxième fluide ruisselant sur la gaine ne parvienne dans l'orifice de collecte et la boite de collecte.

Ce dispositif de connexion permet aussi une libre dilatation de chacune des gaines de manière individuelle, sans remettre en cause les différentes fonctions notamment de conduction du condensat, d'étanchéité entre les premier et deuxième fluides à l'état liquide.

De plus, ce dispositif de connexion, par son poids, permet ainsi une mise en tension de la gaine.

De manière optionnelle, l'évaporateur selon l'invention comprend au moins l'une quelconque des caractéristiques facultatives suivantes prises séparément ou en combinaison :
- l'échangeur est configuré pour permettre une translation verticale de la quille à l'intérieur du tube sous l'effet de la dilatation de la gaine.
- l'extrémité supérieure de la quille est insérée dans l'extrémité inférieure de la gaine.
- la bague et l'autre parmi ladite pièce prise parmi la quille et le tube sur laquelle est rapportée la bague présentent des parois en regard qui sont inclinées et qui présentent sensiblement la même inclinaison. Ainsi, cela est particulièrement avantageux lorsque l'échangeur est destiné à équiper des évaporateurs. En effet, le régime de fonctionnement, caractérisé par une température, n'est pas forcément toujours le même. La fuite optimum de vapeur ne correspond pas toujours à la même calibration. Ce mode de réalisation prévoit de donner à la bague et à l'autre parmi ladite pièce prise parmi la quille et le tube sur laquelle est rapportée la bague une légère conicité. Ainsi, la dilatation résultant d'une température donnée vient faire translater la quille et la positionne à l'endroit correspondant à la fuite idéale pour évacuer les gaz non condensables tout en conservant un bon rendement. Selon le sens adopté pour la conicité, on peut augmenter ou diminuer le jeu de fuite lorsque la température augmente et que la gaine s'allonge.
- lesdites parois en regard sont inclinées de manière à ce qu'un allongement de la gaine sous l'effet d'une dilatation thermique ou du fluage provoque une réduction ou alternativement une augmentation de la section du passage de fuite.
- ladite pièce prise parmi la quille et le tube sur laquelle est rapportée la bague comprend une gorge de réception de la bague.
- la bague et/ou ladite pièce prise parmi la quille et le tube sur laquelle est rapportée la bague présente au moins une zone de déformation élastique pour faciliter l'emboitement par déformation radiale élastique de la bague sur ladite pièce.
- la bague comprend au moins une fente s'étendant sur une partie au moins de la hauteur de la bague, de manière à permettre par déformation élastique, une augmentation ou une réduction du diamètre de la bague. De préférence, la bague comprend une fente s'étendant sur toute la hauteur de la bague.
- Selon un mode de réalisation, la bague est en plastique. Son matériau est rigide. La zone de déformation permet d'agrandir son diamètre interne pour enfiler aisément la bague sur la quille. Alternativement, la bague forme un manchon en élastomère. Elle présente donc une section continue. En déformant le manchon on peut aisément enfiler la bague sur la quille.
- la bague est rapportée sur la quille et le passage de fuite est défini par une paroi externe de la bague et une paroi interne du tube.

La section du passage de fuite est mesurée selon une direction perpendiculaire à la direction selon laquelle la quille se déplace dans le tube. Typiquement, la section du passage de fuite est mesurée selon la direction horizontale.
- La bague présente une extrémité inférieure présentant un chanfrein. Cela permet de facilité l'insertion de la bague à l'intérieur du tube.
- Selon un autre mode de réalisation, la bague est rapportée sur le tube et le passage de fuite est défini par une paroi interne de la bague et une paroi externe de la quille.
- La gaine est en polymère.
- La gaine présente une longueur d'au moins 2 et de préférence d'au moins 3 mètres.
- Avantageusement, la gaine présente un diamètre externe compris entre 15 entre 60 millimètres (10⁻³ mètres) et de préférence entre 25 et 40 millimètres et de préférence de l'ordre de 30 millimètres.
- la gaine présente une épaisseur comprise entre 25 et 200 micromètres (10⁻⁶ mètres) et de préférence entre 50 et 100 micromètres. La gaine permet ainsi un bon échange de chaleur entre les premier et deuxième fluides. Ainsi, la gaine est souple. Cet échangeur est particulièrement bien adapté aux températures de fonctionnement basses, typiquement inférieures à 80°C.
- La gaine est de préférence pendue verticalement.
- En fonctionnement la pression à l'intérieur de la gaine est légèrement supérieure à la pression régnant à l'extérieur de la gaine. Cela permet à la gaine de conserver sa forme, typiquement une forme de section circulaire. La gaine est ainsi flexible, mobile mais présente tout de même une certaine rigidité.
- Le dispositif de connexion fluidique comprend une jupe présentant un conduit interne et une extrémité supérieure qui coiffe à la fois l'extrémité inférieure de la gaine et l'extrémité supérieure de la quille de manière à ce que la gaine soit pincée entre la quille et la gaine et à ce que la jupe et la quille soient suspendues à la gaine.
- De manière optionnelle et avantageuse, le dispositif de connexion fluidique comprend une jupe présentant un passage intérieur et une extrémité supérieure qui coiffe à la fois l'extrémité inférieure de la gaine et l'extrémité supérieure de la quille.
- Avantageusement, la jupe s'étend le long du canal interne de la quille sur au moins quart et de préférence au moins un tiers de la longueur du canal interne.
- Avantageusement, la jupe présente un diamètre extérieur au moins deux et de préférence au moins trois fois supérieur à celui de la tige de la quille.
- Ainsi, le deuxième fluide est éloigné du canal interne traversant la tige de la quille.
- Avantageusement, la jupe présente une extrémité supérieure formant un chanfrein, un bord intérieur du chanfrein s'appliquant sur la paroi externe de la gaine.

Selon un mode de réalisation, l'invention porte sur un ensemble comprenant un échangeur selon l'invention et un jeu de bagues présentant des sections différentes. Typiquement, les diamètres externes des bagues sont différents si les bagues sont fixées sur les quilles et les diamètres internes des bagues sont différents si les bagues sont fixées sur les tubes

Selon un mode de réalisation, l'invention porte sur l'utilisation d'un échangeur selon l'invention pour dessaler de l'eau salée.

Selon un mode de réalisation, l'invention porte sur un évaporateur de solution comprenant une pluralité d'échangeurs selon l'invention. La pluralité d'échangeurs formant de préférence un faisceau ou un film d'échangeurs.

Selon un mode de réalisation, l'invention porte sur un système de concentration de solution comprenant une pluralité d'évaporateurs selon l'invention.

Selon un mode de réalisation optionnel, les évaporateurs sont disposés en série de manière à ce qu'une sortie sous forme de vapeur du deuxième fluide d'un premier évaporateur étant injectée comme premier fluide dans un deuxième évaporateur monté en série avec le premier évaporateur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 illustre un exemple d'un évaporateur de solution équipé de plusieurs échangeurs selon l'invention.
- La figure 2 illustre un exemple de système d'évaporation-concentration de solution comprenant plusieurs étages, formé chacun par un évaporateur illustré en figure 1.
- La figure 3 comprend les figures 3a et 3b. Ces figures 3a et 3b illustrent la partie inférieure d'un échangeur selon l'invention, avec une vue détaillée d'un dispositif de connexion fluidique entre la gaine et un tube définissant un orifice. La figure 3a illustre cet échangeur dans une configuration dans laquelle la gaine est faiblement dilatée. La figure 3b illustre cet échangeur dans une configuration dans laquelle la gaine est fortement dilatée.
- La figure 4 illustre un exemple de quille d'un échangeur selon l'invention.
- La figure 5 illustre un exemple de jupe d'un échangeur selon l'invention.
- La figure 6 illustre un mode de réalisation dans lequel la quille retient la jupe par un joint qui est monté sur la quille et qui enserre la gaine sur la quille.
- La figure 7 illustre un mode de réalisation dans lequel la quille coopère par clipsage avec la jupe en amenant dans une gorge de la jupe un joint qui enserre la gaine sur la quille.
La figure 8 illustre un exemple de tube selon l'invention.
- La figure 9 illustre un exemple de bague selon l'invention.
- La figure 10 est une vue agrandie de la coopération entre la quille, la bague et le tube selon un mode de réalisation de l'invention.
- La figure 11 est une vue agrandie de la coopération entre la quille, la bague et le tube selon un autre mode de réalisation de l'invention.
- La figure 12 illustre un autre mode de réalisation de la tête de quille selon l'invention.
- La figure 13 illustre un mode de réalisation dans lequel la quille coopère par clipsage avec la jupe en pinçant la gaine entre la quille et la jupe.
- La figure 14 illustre un mode de réalisation dans lequel la quille coopère par clipsage avec la jupe et dans lequel la gaine est serrée sur la quille par un joint.
- La figure 15 illustre un mode de réalisation dans lequel la quille coopère avec la jupe par l'intermédiaire d'un élément de butée sur lequel la jupe prend appui et dans lequel la gaine est serrée par un joint sur la quille.
- La figure 16 illustre un mode de réalisation dans lequel la quille coopère avec la jupe par vissage en pinçant la gaine entre la quille et la jupe.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les épaisseurs et diamètres ne sont pas nécessairement représentatifs de la réalité.

### DESCRIPTION DÉTAILLÉE DE L'INVENTION

Une gaine s'étend selon une direction principale. Dans le cadre de la présente invention on mesure une hauteur ou une longueur selon la direction d'extension principale de la gaine. L'épaisseur d'une pièce et la section d'un passage ou d'une pièce sont quant à elles mesurées selon une direction transversale, c'est-à-dire selon une direction perpendiculaire à la direction d'extension principale de la gaine. De préférence, les gaines pendent à la verticale. Dans ce cas, les hauteurs et les longueurs sont donc mesurées selon la verticale. L'épaisseur et la section d'un passage ou d'une pièce sont mesurées selon la direction horizontale.

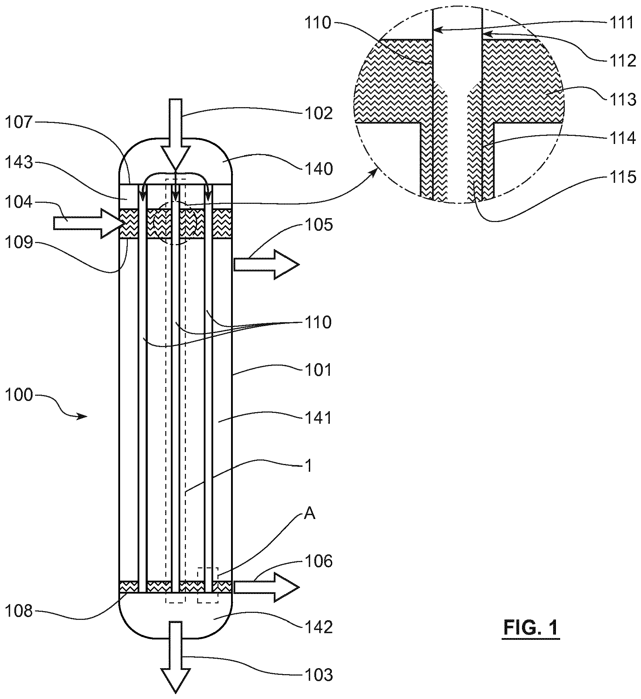

En référence à la figure 1, un évaporateur 100 de solution pouvant intégrer plusieurs échangeurs 1 selon l'invention va maintenant être détaillé.

L'évaporateur 100 comprend une enceinte 101 étanche à l'intérieur de laquelle plusieurs chambres sont présentes.

Une chambre 140 d'introduction du premier fluide située en partie supérieure de l'enceinte 101. Selon un exemple non limitatif le premier fluide est de la vapeur d'eau. Cette vapeur est introduite par une entrée 102. Cette chambre 140 d'introduction de la vapeur d'eau est délimitée par la paroi interne de l'enceinte 101 et une plaque supérieure 107 munie d'orifices à l'intérieur desquels sont insérées des gaines 110.

Chaque gaine 110 s'étend de préférence verticalement depuis la plaque supérieure 107 jusqu'à une plaque inférieure 108 également munie d'orifices pour faire communiquer l'intérieur de chaque gaine 110 avec une chambre 142 de collecte du condensat, cette chambre 142 étant définie par la paroi interne de l'extrémité inférieure de l'enceinte 101 et la plaque inférieure 108.

Une plaque additionnelle désignée plaque de formation du ruissellement 109 est disposée sous la plaque supérieure 107 et définit avec cette dernière une chambre 143 d'introduction du deuxième fluide à concentrer par évaporation. Selon un exemple non limitatif, ce deuxième fluide est de l'eau salée 113.

Une entrée 104 permet l'introduction du deuxième fluide depuis l'extérieur de l'enceinte 101. La plaque de formation du ruissellement 109 est configurée de manière à ce que le deuxième fluide ruisselle sur la paroi externe 112 de chaque gaine 110, de préférence sous forme d'un film 114 mince, couvrant préférentiellement toute la surface de la paroi externe 112 de la gaine 110.

L'enceinte 101 délimite avec la plaque de formation du ruissellement 109 et avec la plaque inférieure 108, une chambre intermédiaire désignée chambre d'évaporation 141.

La vapeur introduite à l'intérieur des gaines 110 depuis la chambre 140 parcourt la gaine, dans cet exemple dans le sens de la gravité, ce qui a pour effet de provoquer un échange de chaleur entre les premier et deuxième fluides à travers la paroi de la gaine 110.

La vapeur transfère une partie de sa chaleur au deuxième fluide qui ruisselle sur la paroi externe 112 de la gaine 110. Cela a pour conséquence de condenser la vapeur sur la paroi interne 111 de la gaine, augmentant encore de ce fait le transfert thermique puisque le coefficient de transfert thermique entre la vapeur condensée et le deuxième fluide est meilleur qu'entre la vapeur gazeuse et le deuxième fluide.

Par ailleurs, la condensation est un changement d'état exothermique qui dégage de la chaleur dont une partie est transférée au deuxième fluide.

La vapeur condensée 115, désignée également condensat, s'écoule à l'intérieur de la gaine 110 jusqu'à parvenir dans la chambre de collecte 142 à l'intérieur de laquelle débouchent les gaines 110. De l'eau douce peut alors être extraite de cette chambre de collecte 142 par la sortie 103.

Le premier fluide qui ruisselle sous forme de film 114 le long de la gaine 110, se vaporise au fur et à mesure qu'il emmagasine de la chaleur provenant de l'intérieur de la gaine 110. Ce deuxième fluide se sépare alors en une phase gazeuse, sous forme de vapeur d'eau typiquement et une phase liquide, dont la concentration est plus élevée que lors de son introduction dans la chambre 143. La vapeur ainsi produite est récupérée par une sortie de vapeur 105. La solution plus concentrée, désignée saumure, lorsque le deuxième fluide est de l'eau salée extraite de l'enceinte 101 par une sortie 104.

Il faut naturellement que les pressions dans l'évaporateur soient réglées de manière à ce que le premier fluide parcoure la gaine 110 dans le sens souhaité. La pression régnant à l'intérieur des gaines 110 est plus importante que celle régnant dans la chambre d'évaporation 141. Ainsi, chaque gaine 110 forme un échangeur de chaleur pour évaporateur-concentrateur du deuxième fluide, par exemple une solution d'eau salée.

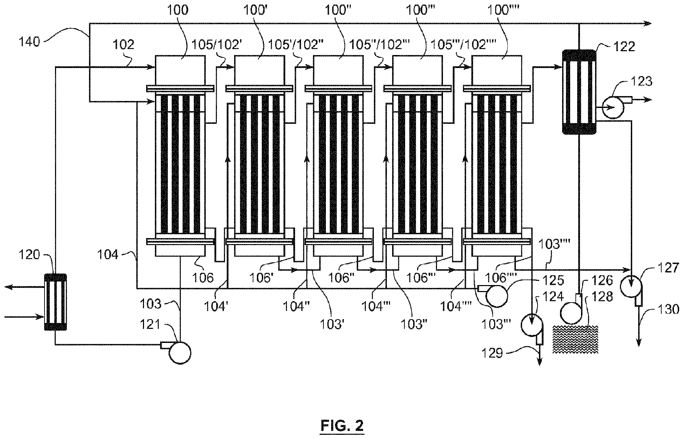

La figure 2 illustre un système de concentration de solution comprenant plusieurs évaporateurs 100, 100', 100", 100"', 100"" disposés en série, chaque évaporateur pouvant être identique à celui illustré en figure 1.

Chaque évaporateur 100-100"" forme un étage d'évaporation-concentration. De manière avantageuse, la vapeur produite à partir du deuxième fluide par un étage est injectée dans l'étage suivant comme vapeur (premier fluide).

Plus en détail, un premier évaporateur 100 reçoit en entrée 102 de la vapeur provenant d'un générateur de vapeur issue d'une source chaude 120. Ce premier évaporateur 100 reçoit par l'entrée 104, le deuxième fluide, typiquement de l'eau salée.

L'eau issue de la condensation de la vapeur à l'intérieur de la gaine est extraite par la sortie 103 pour être renvoyée au générateur de vapeur 120.

La vapeur produite à l'évaporateur 100 et extraite par la sortie 105 pour être introduite par l'entrée 102' de l'évaporateur 100'.

La vapeur condensée extraite par la sortie 103' de l'évaporateur 100' est récupérée dans un réservoir de l'évaporateur 100" et ainsi de suite jusqu'au circuit d'eau douce 130.

La solution concentrée, ou saumure, collectée après un évaporateur chemine dans l'évaporateur suivant jusqu'au circuit saumure 129 de solution concentrée. De préférence, c'est ce circuit 129 de solution concentrée qui fournit la solution à évaporer-concentrer en entrée des évaporateurs 100-100"", après ajout d'un appoint de solution à concentrer 140

Sur le système illustré en figure 2, les cinq évaporateurs 100-100"" sont disposés en série.

La sortie de vapeur 105"" du dernier évaporateur 100"" est injectée dans un condenseur final 122 alimenté par la solution 128 à concentrer, typiquement de l'eau de mer. De la solution 128 réchauffée, on prélève l'appoint 140. On chauffe une solution 128, de préférence moins concentrée que la solution 129, afin d'extraire de l'eau douce de cette solution 128.

Des pompes 124-127 permettent la mise en circulation des différents fluides. Un extracteur d'air 123 permet de collecter et d'extraire les incondensables qui ont été canalisés jusqu'au condenseur final 122. Selon un exemple non limitatif dans lequel le fluide à évapo-concentrer est de l'eau salée, la solution 128 est de l'eau de mer, comprenant par exemple 35g de sel par litre, le circuit 129 est une solution plus concentrée en sel, typiquement 70 g/l.

La source chaude 120 produit de la vapeur à moins de 80°C.

De manière avantageuse, la saumure issue de chaque évaporateur 100-100"" est récupérée dans le circuit 129 est partiellement réinjectée comme deuxième fluide dans chacun des évaporateurs par la pompe 125. On notera que pour que chaque étage d'évaporation-condensation fonctionne, il faut atteindre, au sein des chambres d'évaporation de chaque évaporateur, le point d'évaporation du deuxième fluide. Or, la température baisse d'un étage à l'autre puisque le seul apport de chaleur est fourni par la source d'eau chaude 120.

Il est donc nécessaire que la pression régnant dans les chambres d'évaporation décroisse d'étage en étage. Dans chaque évaporateurs 100-100"", l'évaporation s'effectue à une température et à une pression inférieures à celles des évaporateurs précédents. Par ailleurs, il est nécessaire que les flux de vapeur parcourent sans difficulté l'ensemble des étages afin de ne pas réduire le rendement du système.

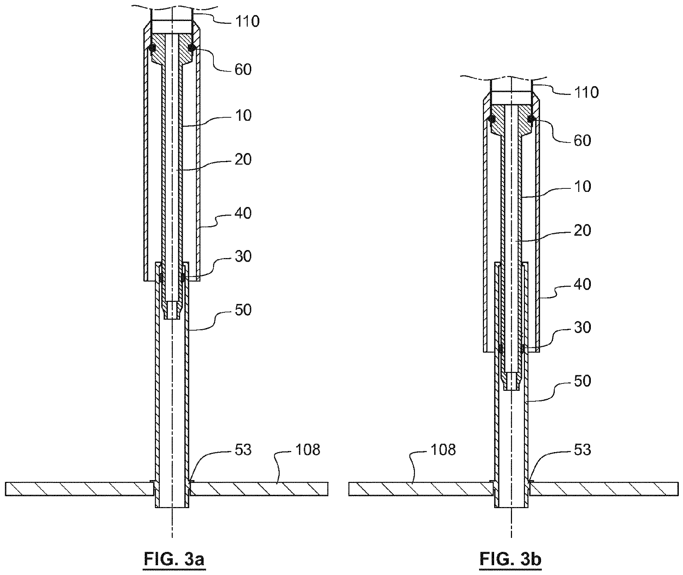

Le dispositif de connexion fluidique qui va maintenant être décrit en détail en référence aux figures 3 à 10 permet de conserver un bon écoulement des flux à travers chaque étage et améliore ainsi le rendement de chaque évaporateur et le rendement global du système.

Les figures 3 a et 3b illustrent un exemple du dispositif de connexion fluidique complet entre une gaine 110 et un tube 50. Ces figures représentent une vue agrandie de la zone A référencée en figure 1.

Le dispositif de connexion fluidique est spécialement avantageux pour les gaines 110 présentant un coefficient de dilatation thermique ou un fluage important. Tel est le cas des gaines en polymère dont le coefficient de dilatation thermique est compris entre 5 et 10.10⁻⁵. Par ailleurs, les gaines en polymère sont souvent sujettes à un certain fluage, c'est-à-dire une déformation plastique, sous l'effet de leur poids par exemple. Ces gaines présentent pour avantage d'être inertes chimiquement avec les solutions à concentrer, notamment avec de l'eau salée, contrairement aux tubes en métal.

Comme leur coefficient de conduction thermique est faible, bien inférieur à celui des gaines en métal, il est nécessaire de prévoir une épaisseur de paroi très faible. Dans le cadre de l'invention, l'épaisseur de la paroi de la gaine est typiquement comprise entre 25 et 200 micromètres (10⁻⁶ mètres) et de préférence entre 50 et 100 µm et de préférence de l'ordre de 50µm. Une telle épaisseur rend la gaine très souple, flexible.

En solidarisant l'extrémité supérieure de la gaine 110 par exemple à la plaque supérieure 107, la gaine 110 pend à la verticale sous l'effet de son poids. Le film 114 d'eau salée peut ainsi ruisseler par gravité tout le long de la gaine 110.

On prévoit que l'extrémité inférieure de la gaine 110 soit solidaire d'une quille 10 du dispositif de connexion fluidique. La quille 10 s'étend principalement selon la direction d'extension de la gaine 110, c'est-à-dire dans cet exemple selon la direction verticale. La quille 10 présente un canal interne 20 dont une entrée supérieure débouche à l'intérieur de la gaine 110 et dont une sortie débouche à l'intérieur d'un orifice 55 de collecte.

Selon un mode de réalisation non illustré, l'orifice de collecte est défini par un trou dans une plaque, typiquement la plaque inférieure 108.

De façon préférée mais non limitative, l'orifice 55 de collecte est formé par l'extrémité d'un tube 50.

Dans la description qui suit toutes les caractéristiques présentées s'appliquent à chacun des deux modes de réalisation mentionnés ci-dessus (orifice de collecte formé par une plaque ou orifice de collecte formé par l'extrémité d'un tube).

Le tube 50 présente une zone de fixation 53 par lequel il est fixé sur la plaque inférieure 108 dont la face inférieure délimite avec l'enceinte 101 la chambre de collecte 142 du condensat, typiquement l'eau douce. Le tube 50 est fixé à la plaque 108 de manière étanche, c'est-à-dire qu'aucun fluide ne peut s'introduire entre la paroi externe du tube 50 et la plaque inférieure 108.

Ainsi, la vapeur condensée parvenant en extrémité inférieure de la gaine 110 s'introduit dans le canal 20 de la quille 10 puis parvient, en sortie de canal 20 à l'intérieur de l'orifice 55 de collecte (et donc du tube 50) avant d'arriver dans la chambre de collecte 142 du condensat.

La quille 10 et la gaine 110 sont liées de manière étanche, c'est-à-dire que le premier fluide situé à l'intérieur de la gaine 110 ne peut pas passer entre la paroi interne de la quille 10 et la paroi interne 111 de la gaine 110. Ce premier fluide ne peut que passer dans le canal 20.

A cet effet, on prévoit que la quille 10 soit emmanchée à l'intérieur de la gaine 110. Ainsi, la paroi externe 13 de la quille 10 est au contact de la paroi interne 111 de la gaine 110.

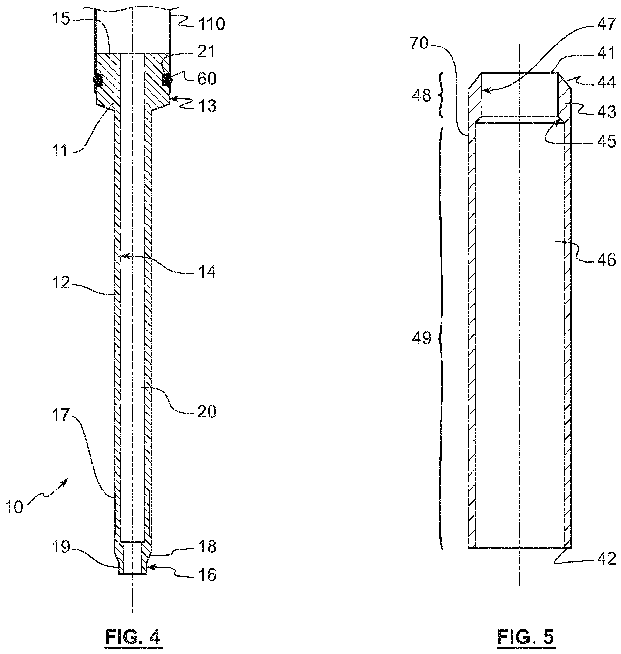

Selon le mode de réalisation illustré en figure 4, la quille 10 présente une tête 11 et une tige 12. Le canal 20 s'étend à travers la tête 11 et la tige 12 et présente un diamètre, également désigné section de passage. Le canal présente un diamètre constant le long de l'écoulement du condensat. De préférence il présente une légère dépouille pour être démoulée facilement si la quille est obtenue par moulage par injection. La tête 11 présente un diamètre externe correspondant sensiblement au diamètre interne de la gaine 110. Si la gaine 110 n'est pas élastique radialement, on prévoit une tolérance pour permettre l'insertion de la tête 11 de quille 10 à l'intérieur de la gaine 110. La longueur de la tête 11, c'est-à-dire la dimension de la tête 11 prise selon la direction d'extension de la quille 10, correspond sensiblement à la profondeur d'insertion de la quille 10 dans la gaine 110.

De préférence, la paroi externe de la tige 12 de la quille 10 est sensiblement constant, sauf à son extrémité inférieure 16 comme cela sera décrit en détail par la suite. De préférence la paroi externe de la tige 12 présente une légère dépouille pour être démoulée facilement si la quille est obtenue par moulage par injection.

Selon un mode de réalisation avantageux, la paroi externe 13 de la tête 11 est conique, la section de cette paroi externe 13 se réduisant à l'approche de l'extrémité supérieure 15 de la tête 11. Cette conicité est destinée à faciliter le montage de la quille 10 dans la gaine 110 et à adapter l'enfoncement de la quille 10 pour compenser la dispersion de diamètre de la gaine 110. Un autre avantage conféré par cette conicité sera décrit en détail par la suite.

Pour un enfoncement de 20 mm de la quille 10 dans la gaine 110, on prévoit une réduction de diamètre de la paroi externe 13 de la tête 11 comprise entre 0,5 et 1,5 mm et de préférence de l'ordre de 0,9 mm.

Avantageusement, une légère dépouille est prévue entre la tête 11 et la tige 12 pour faciliter le démoulage de la quille 10 fabriquée de préférence par injection.

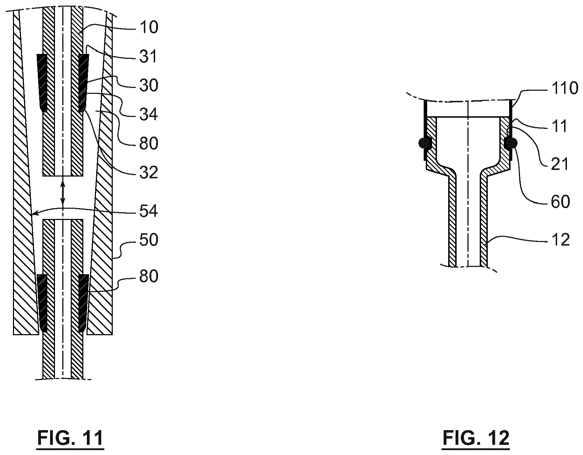

Selon un mode de réalisation privilégié et illustré en figure 12, l'épaisseur de la tête 11 est amincie par exemple pour économiser de la matière ou réduire le poids pesant en extrémité de la gaine 110.

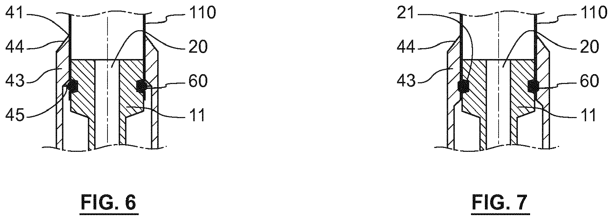

Selon un mode de réalisation avantageux illustré en figures 6, 7, 14, 15, un joint 60 est enfilé autour de la paroi externe 112 de la gaine 110 au niveau de la tête 11 de la quille 10. Le joint 60, de préférence un joint torique, enserre ainsi à la fois la quille 10 et la gaine 110.

Le joint 60 assure l'étanchéité entre l'intérieur de la gaine 110 et le canal 22 de la quille 10.

Comme cela sera décrit en détail par la suite, ce joint 60 peut assurer uniquement la fonction d'étanchéité.

De manière particulièrement avantageuse et optionnelle, ce joint 60 assure la retenue de la quille 10 sur la gaine 110. Avantageusement, la fixation de la quille 10 à la gaine 110 est assurée uniquement par ce joint 60 qui enserre la gaine 110 sur la quille 10. Selon un autre mode de réalisation, la gaine 110, en partie élastique, exerce un effort de compression autour de la tête de la quille 10 et renforce ainsi la fixation de cette dernière.

Selon encore un autre mode de réalisation, le joint 60 assure la retenue d'une jupe 40 sur la quille 10. Un même joint 60 peut assurer l'une seulement de ces fonctions ou chacune de ces fonctions.

De préférence et comme illustré sur les figures 6, 7, 14, 15, la tête 11 de la quille 10 comporte une gorge 21 conformée pour loger en partie le joint 60. La gorge permet ainsi de positionner plus aisément le joint 60 autour de la quille 10 et d'éviter un retrait involontaire.

Selon un mode de réalisation privilégié et illustré sur les figures 3a, 3b et 5, le dispositif de connexion fluidique comporte une jupe 40. La jupe 40 présente une forme générale de tube dont la section peut être constante ou non. Dans l'exemple illustré, la jupe 40 présente une section extérieure sensiblement constante. Elle présente un passage intérieur 42 de section supérieure au corps 12 de la quille 10.

La jupe 40 est configurée pour être solidarisée sur l'extrémité inférieure de la gaine 110 au niveau de la quille 10.

Ainsi, la jupe 40 et la quille 10 pendent à l'extrémité de la gaine 110. Elles tendent ainsi à maintenir la gaine en position verticale et elles accompagnent la gaine lors des dilatations de cette dernière.

Selon un mode de réalisation avantageux, l'extrémité supérieure de la jupe 40 présente une paroi inclinée 44 formée par un chanfrein. La paroi inclinée 44 s'étend depuis l'intérieur de la jupe 40, au contact de la paroi externe 112 de la gaine 110, et descend jusqu'à la paroi externe de la jupe 40. Cette paroi inclinée 44 permet de conserver la continuité du film 114 ruisselant le long de la jupe 40.

Avantageusement, cette paroi inclinée 44 et le chanfrein forment des dépouilles qui facilitent le démoulage de la jupe 40 lors de sa fabrication.

Comme illustré en figures 3a et 3b, la jupe 40 coiffe également l'extrémité supérieure du tube 50. Plus précisément, la jupe 40 s'étend suffisamment pour recouvrir l'extrémité supérieure du tube 50, et ceci, de préférence quelle que soit la dilatation de la gaine 110 : ainsi l'extrémité inférieure de la jupe 40 est verticalement située sous l'orifice 55 d'entrée du tube 50.

Par conséquent, le deuxième film qui ruisselle sur la paroi externe 112 de la gaine 110 s'écoule ensuite sur la paroi externe de la jupe 40 puis tombe par gravité dans le fond de la chambre d'évaporation 141, par exemple sur la face supérieure de la plaque inférieure 108. Ce deuxième fluide ne peut pas s'introduire dans l'orifice 55 du tube 50.

Cette configuration permet aussi une étanchéité parfaite de la chambre 142 de collecte du condensat.

Sur l'exemple illustré en figure 3 (figure 3a et 3b), la gaine mesure entre 3 et 4 mètres de long, une épaisseur comprise entre 50 et 100µm, la quille et la jupe présentent respectivement une hauteur de 206 et de 190mm. La dilatation de la gaine est de l'ordre de 50 mm en fonctionnement. Quelle que soit la dilatation de la gaine, la jupe 40 coiffe l'orifice 55 d'entrée du tube 50.

De préférence, la jupe 40 présente un diamètre externe au moins deux et de préférence au moins trois fois supérieur à celui de la tige 12 de la quille 10. Ainsi, le deuxième fluide est éloigné du canal interne traversant la tige de la quille. Sur l'exemple illustré en figure 3 (figure 3a et 3b), le diamètre externe de la jupe 40 est de 38mm et celui de la tige 12 de la quille 10 et de 14mm.

La solidarisation de la jupe 40 avec la quille 10 ainsi que la fixation de la quille 10 à la gaine 110 peuvent être effectuées selon plusieurs modes de réalisation.

Des premiers modes de réalisation vont maintenant être décrits en détail en référence aux figures 3a, 3b, 4, 5, 6 et 7.

Comme illustré en figure 3a, la jupe 40 coiffe à la fois la gaine 110 et la quille 10. Elle présente un passage intérieur dont les dimensions ou la forme sont conformées pour coopérer avec la tête 11 de la quille 10 de manière à venir pincer la gaine 110 entre la jupe 40 et la quille 10.

En outre, les parois complémentaires de la jupe 40 et de la quille 10 sont conformées de manière à ce que le poids de la jupe 40 tende à rapprocher la jupe 40 de la quille 10 et à augmenter l'effort du pincement entre ces deux pièces.

La paroi interne 47 de la jupe 40 comprend une portion supérieure 48 présentant une section transversale inférieure au diamètre externe du joint 60 et comprend une portion inférieure 49 présentant une section transversale augmentée. La section de la portion inférieure 49 est supérieure à la section transversale de la tête 11 de la quille 10. Une paroi interne conique 45 vers le bas assure une jonction entre les portions supérieure 48 et inférieure 49. De préférence, la réduction de section de la portion supérieure 47 est formée par une surépaisseur 43 de la jupe 40.

Le joint torique 60 présente un diamètre compris entre les sections des portions supérieure 48 et inférieure 49. Ainsi, le joint 60 torique vient s'appliquer contre la paroi interne conique 45.

Ce mode de réalisation est illustré en figure 6. La gaine 110 se trouve pincée entre la quille 10 dont la tête 11 appuie sur la paroi interne 111 de la gaine 110 et la jupe 40 qui appuie contre la paroi externe 112 de la gaine 110. On obtient ainsi une fixation simple à mettre en oeuvre et qui est particulièrement fiable.

La gorge 21 pratiquée dans la quille 10 et le joint 60 torique qui forme une butée pour empêcher la translation de la jupe 40 vers le bas par gravité renforcent la fiabilité de cette fixation.

Selon un mode de réalisation, la fixation de la jupe 40 et de la quille 10 sur la gaine 110 comprend les étapes suivantes :
- insertion de la gaine 110 à l'intérieur des passages intérieurs des parties 48 et 49 de la jupe 40 ; cette insertion peut être réalisée depuis l'une quelconque des extrémités supérieure ou inférieure de la gaine 110, de préférence depuis l'extrémité inférieure.
- désengagement de l'extrémité inférieure de la gaine 110 pour la rendre accessible. Cela peut être effectué en repoussant vers le haut la jupe 40 ;
- insertion de la tête 11 de la quille 10 à l'intérieur de la gaine 110, cette insertion étant facilitée par la forme conique de la tête 11 ;
- insertion du joint 60 dans la gorge 21 de la tête 11 ;
- descente de la jupe 40 pour coiffer la tête 11 de la quille 10 et jusqu'à ce que la paroi interne 47 de la jupe 40 vienne en butée sur le joint 60.

Cette butée est la paroi interne conique 45 dans le mode de réalisation illustré en figure 6.

Cette butée est la gorge pratiquée dans la paroi interne 47, comme illustré en figure 7.

De préférence, l'ensemble ainsi assemblé est ensuite introduit dans l'évaporateur 100 à travers les plaques 107, 108, 109. Cette fixation des différents éléments est particulièrement simple et fiable. On peut notamment passer ce dispositif de connexion fluidique à travers les différentes plaques et tubes. Par ailleurs, il est aisément démontable ce qui peut être avantageux pour la maintenance de l'échangeur.

La solution proposée est particulièrement simple et avantageuse. En effet, avec la solution selon l'invention, la gaine 110 est fixée sur la quille 10 et la jupe 40 vient simplement coiffer le tout, la fonction de blocage de la gaine étant assurée par la simple coopération par appui entre la jupe 40 et la quille 10. L'ensemble est donc plus facile à réaliser par injection plastique, dans un moule simple. L'obtention de ces pièces est donc moins chère et ne nécessite pas d'opération de reprise.

Selon un mode de réalisation illustré en figure 7, la paroi interne 47 de la portion supérieure 48 de la jupe 40 comporte également une gorge conformée pour recevoir le joint 60. Dans ce mode de réalisation, la jupe 40 et la quille 10 sont déplacées l'une par rapport à l'autre jusqu'à ce que le joint 60, placé au préalable dans la gorge 21 de la quille 10 s'insère dans la gorge de la jupe 40. De préférence, cet emmanchement est un emmanchement doux.

Ainsi, on obtient une coopération de la jupe 4à sur la quille 10 par clipsage.

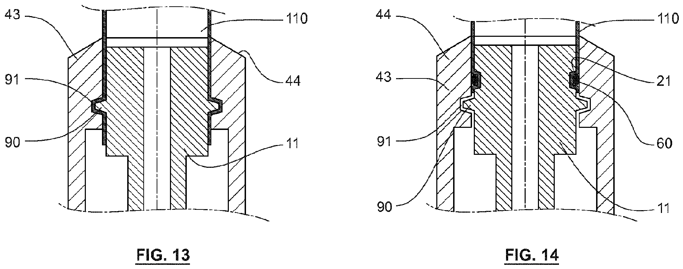

Un autre mode de réalisation de la fixation entre la quille 10 et la jupe 40 va maintenant être décrit en référence à la figure 13.

Dans ce mode de réalisation, la paroi externe de la tête 11 de la quille 10 et la paroi interne de la jupe 40 présentent des portions complémentaires 90, 91 configurées pour coopérer de manière à permettre un clipsage de la jupe 40 sur la quille 10. Sur l'exemple illustré, ces portions complémentaires 90, 91 forment une protubérance à la surface de la paroi externe de la tête 11 de la quille 10 et une encoche de forme complémentaire portée par la paroi interne de la jupe 40.

Sur l'exemple de la figure 13, la gaine 110 est pincée entre la jupe 40 et la quille 10 au niveau de ces portions complémentaires 90, 91. Cela assure ainsi la retenue de la quille 10 sur la gaine 110. Ce pincement assure également l'étanchéité entre la quille 10 et la gaine 110.

Ainsi la fonction de fixation de la jupe 40 à la quille 10 est réalisée par les mêmes éléments que la fonction de retenue de la quille 10 sur la gaine 110.

Ce mode de réalisation est particulièrement peu onéreux à fabriquer et facile à assembler.

Le mode de réalisation de la figure 14 reprend les caractéristiques et avantages de celui de la figure 13 avec comme différence, que la quille 10 est suspendue à la gaine 110 par un joint 60 qui enserre la gaine 110 sur la tête 11 de la quille 10 au-dessus des portions complémentaires 90, 91. Ainsi la fonction de fixation de la jupe 40 à la quille 10 est réalisée de manière séparée de la fonction de retenue de la quille 10 sur la gaine 110. Cela permet également de renforcer l'étanchéité entre la gaine 110 et le canal 20 de la quille 10.

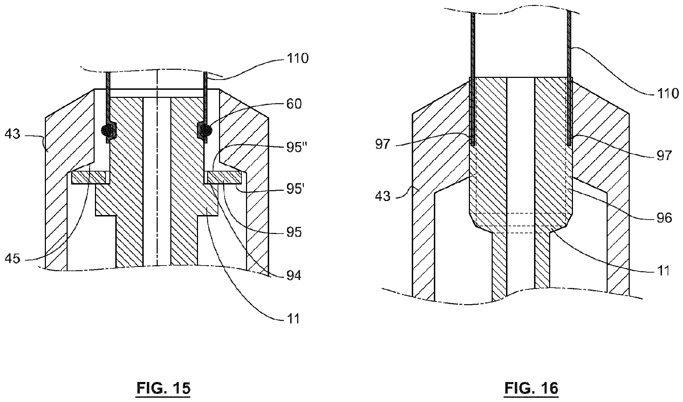

Un autre mode de réalisation de la fixation entre la quille 10 et la jupe 40 va maintenant être décrit en référence à la figure 15.

Dans ce mode de réalisation, un élément de butée 95, formé par une rondelle, est rapportée sur la quille 10. Cet élément de butée 95 forme une butée empêchant la jupe 40 de chuter par gravité. Une augmentation de diamètre de la quille 10 forme une surface 94 d'appui sur la quille 10 pour une face inférieure 95' de la rondelle. La rondelle présente un diamètre interne permettant son enfilement sur la tête 11 de la quille 10. La face supérieure 95" de la rondelle forme une butée sur laquelle s'appuie la jupe 40 au niveau d'une paroi interne 45 formant une réduction de son passage interne 46.

De préférence, on prévoit que la retenue de la quille 10 est assurée par un joint 60 qui enserre la gaine 110 autour de la tête 11 de la quille 10 au-dessus de l'élément de butée 95.

Ainsi la fonction de fixation de la jupe 40 à la quille 10 est réalisée de manière séparée de la fonction de retenue de la quille 10 sur la gaine 110.

Un autre mode de réalisation de la fixation entre la quille 10 et la jupe 40 va maintenant être décrit en référence à la figure 16.

Dans ce mode de réalisation, la paroi externe de la tête 11 de la quille 10 et la paroi interne de la jupe 40 présentent des filetages complémentaires 96, 97 configurés pour coopérer de manière à permettre un vissage de la jupe 40 sur la quille 10.

On peut prévoir que la gaine 110 soit pincée entre les deux filetages complémentaires 96, 97. Cela assure ainsi la retenue de la quille 10 sur la gaine 110. Ce pincement assure également l'étanchéité entre la quille 10 et la gaine 110.

Alternativement, selon un mode de réalisation non illustré on peut prévoir que la retenue de la quille 10 est assurée par un joint 60 qui enserre la gaine 110 sur la tête 11 de la quille 10 au-dessus des filetages 96, 97. Ainsi la fonction de fixation de la jupe 40 à la quille 10 est réalisée de manière séparée de la fonction de retenue de la quille 10 sur la gaine 110. Cela permet de renforcer l'étanchéité entre la gaine 110 et le canal 20 de la quille 10.

Ces modes de réalisation ont pour avantage que la jupe 40 ne reste pas coincée au passage des plaques 107, 108 et des grilles d'espacement dans le corps de l'évaporateur 100.

Comme illustré en figures 3a et 3b, l'extrémité inférieure de la quille 10 est située à l'intérieur de l'orifice 55 de collecte, qui dans cet exemple défini par l'extrémité supérieure du tube 50. Ainsi, cette extrémité inférieure de la quille 10 est verticalement située sous l'orifice 55 de collecte. Par conséquent, tout le premier fluide qui s'est condensé et qui s'écoule le long de la gaine 110 puis de la quille 10 est recueilli ensuite dans la chambre de collecte 142 du condensat.

Le diamètre externe de la quille 10, en particulier de son extrémité inférieure, est inférieur à la section de passage du tube 50. Un passage de fuite et ainsi ménagé entre la quille 10 et le tube 50. Ce passage de fuite permet à une partie au moins des gaz non condensés de s'échapper. Or, il a été identifié que le premier fluide ne comprend quasiment jamais uniquement de la vapeur mais comprend également des gaz non condensables tels que de l'oxygène et de l'azote. Ces gaz non condensables parviennent à l'intérieur des gaines 110 soit depuis l'extérieur par d'inévitables fuites du système, soit proviennent de gaz initialement dissous dans la solution à évaporer par exemple de l'eau de mer.

Ces gaz non condensés peuvent s'accumuler dans l'échangeur, notamment dans le fond des gaines 110 jusqu'à former un bouchon qui réduit, voire empêche la circulation de la vapeur, entraînant de ce fait une réduction du rendement du système.

En prévoyant un passage de fuite entre le tube 50 et la quille 10, l'invention évite toute formation de bouchon. Les gaz non condensables parcourent le système sans s'accumuler. Alors que l'on se serait attendu à avoir une baisse du rendement du système du fait de la fuite, le rendement au contraire augmente du fait de la disparition des bouchons de gaz non condensables.

De manière particulièrement avantageuse, le dispositif de connexion fluidique comporte une bague 30 rapportée sur une pièce prise parmi la quille 10 et le tube 50. La bague 30 est configurée pour définir avec l'autre parmi la quille 10 et le tube 50 un passage de fuite 80 pour l'évacuation d'une partie du premier fluide non condensé, sous forme gazeuse, provenant de l'extrémité inférieure 16 de la quille 10.

Ainsi, il suffit de choisir une bague 30 de section transversale adaptée afin d'adapter le débit de fuite. En disposant d'un jeu de bagues présentant des dimensions transversales différentes, on peut ainsi régler le débit de fuite afin qu'il soit suffisant pour permettre d'évacuer les gaz non condensables tout en étant suffisamment faible pour limiter le passage de vapeur depuis la gaine vers la chambre d'évaporation de manière à conserver un rendement satisfaisant.

Selon un mode de réalisation, la bague 30 est en plastique. Elle est formée d'un matériau rigide. Elle présente une zone de déformation qui permet d'agrandir ou de rétrécir son diamètre pour enfiler aisément la bague sur la quille ou l'introduire dans le tube. Selon un mode de réalisation alternatif non illustré, la bague 30 forme un manchon en élastomère. Elle présente donc une section continue. En déformant le manchon on peut aisément enfiler la bague 30 sur la quille 20.

Selon le mode de réalisation illustré aux figures 3a, 3b, 9, 10 et 11, la bague 30 est rapportée sur la quille 10. Le passage de fuite 80 est donc défini par le jeu entre le tube 50 et la bague 30. Ce passage de fuite 80 est surtout visible sur la figure 11 dont les dimensions sont exagérées pour faciliter la compréhension.

De préférence, l'extrémité inférieure 16 de la quille 10 comprend une gorge 17 circulaire conformée pour loger la bague 30. Ainsi, la mise en position et le maintien en position de la bague 30 sur la quille 10 est simple et plus fiable.

L'extrémité inférieure 16 de la quille 10 comporte également une réduction de diamètre externe 19 se prolongeant en direction de l'extrémité supérieure 15 par un chanfrein 18 jusqu'à présenter un diamètre constant plus large. Cette réduction 19 de section et ce chanfrein 18 permettent de faciliter l'insertion de la bague 30 sur la quille 10 depuis l'extrémité inférieure 16 de cette dernière.

Typiquement, le chanfrein 18 présente une inclinaison de 30°.

De préférence, la bague 30 et/ou l'extrémité inférieure 16 de la quille 10 présente une zone de fragilisation pour permettre une déformation élastique. Par exemple, une bague 30 et/ou la quille 10 est fendue afin de faciliter une déformation élastique de leur section, permettant de ce fait de faciliter leur assemblage mutuel.

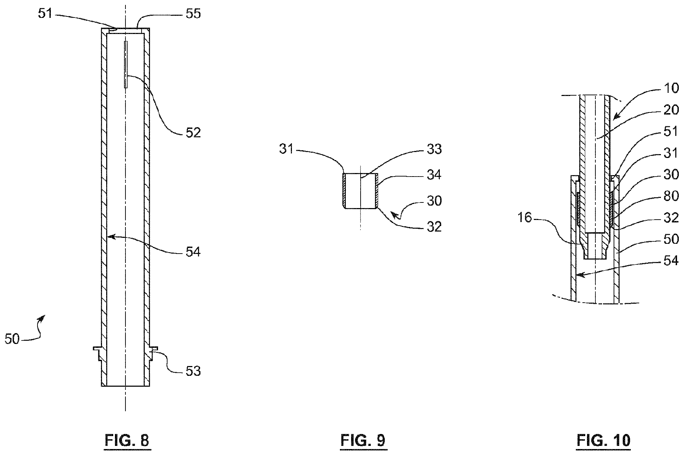

Sur l'exemple illustré sur la figure 9, la bague 30 présente une fente 33 qui s'étend sur toute la hauteur de la bague 30. Ainsi, le diamètre intérieur de la bague 30 peut être élastiquement augmenté, le temps d'enfiler cette dernière sur la quille 10. Par ailleurs, cela permet de prévoir qu'au repos le diamètre intérieur de la bague est égal au diamètre de la gorge 17, de manière à ce que la bague 30 soit montée serrée sur la quille 10 afin de renforcer son maintien.

Ainsi, la bague 30 vient se clipser sur la quille 10.

En position de repos de l'échangeur, c'est-à-dire à froid, la bague 30 est positionnée dans le tube 50 comme illustré en figure 3a.

Sous l'effet de la dilatation de la gaine 110 à chaud et éventuellement du fluage, la quille 10 descend dans le tube 50 comme illustré en figure 3b.

Les dimensions de la bague 30 sont calculées pour calibrer le débit de fuite entre le bord extérieur de la bague 30 et la paroi interne 54 du tube 50. Le jeu peut varier de quelques dixièmes de millimètres à un millimètre. Le tableau ci-dessous donne les dimensions de la bague 30 pour différentes températures de fonctionnement. Dans cet exemple, la bague 30 est adaptée pour s'insérer dans un tube 50 de 15mm de diamètre intérieur. La colonne A indique le diamètre de la paroi externe 34 de la bague en millimètres. La colonne Tmax indique la température maximale de fonctionnement

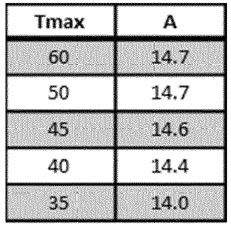

Le tube 50 présente de préférence des fentes 52 s'étendant depuis son extrémité supérieure et en direction de son extrémité inférieure. Typiquement, ces fentes sont au nombre de trois, réparties à 120° et présentent une longueur de 25 mm, une largeur de 1 mm pour un tube de 14,2mm de diamètre interne. Ces fentes permettent de déformer élastiquement l'extrémité supérieure du tube 50, en l'augmentant, afin de faire passer la quille 10 et la bague 30 dans le tube 50.

De préférence, l'extrémité inférieure de la bague 30 présente un chanfrein 32 pour faciliter son introduction à travers l'orifice de collecte.

Selon un mode de réalisation optionnel et avantageux, l'orifice 55 de collecte comporte un rebord 51, tel une surépaisseur s'étendant radialement vers l'intérieur de l'orifice de collecte, c'est à dire dans cet exemple, vers l'intérieur du tube. L'orifice de collecte 55 présente ainsi une réduction de section.

La section de passage définie par cette réduction de section est inférieure à la section externe de la bague. Ainsi, lorsque la tige 12 et la bague 30 sont insérées dans le tube 50, ils ne peuvent pas s'en échapper puisque la bague 30 vient buter sur la réduction de section. De préférence, on prévoit que la bague 30 présente une extrémité supérieure 31 formant une surface de butée avec la réduction de section du tube 50 lors d'un mouvement de retrait de la tige 12 hors du tube 50. Cette surface est par exemple plane. Cela permet d'éviter que l'extrémité de la tige 12 ne se désengage involontairement de l'orifice de collecte 55.

Or, ce risque est présent, notamment lors du transport de l'échangeur lors de l'installation sur site de l'échangeur ou suite à un écart brutal de pression. Ce risque de déboîtement de la quille 10 est particulièrement élevé lors de la remise en route de l'échangeur.

Alternativement on prévoit en chanfrein au niveau de l'extrémité 31 afin de faciliter le démontage de la bague 10 hors du tube 50.

Les fentes 52 prévues sur le tube 50 permettent d'augmenter momentanément la section de l'orifice 55 afin d'insérer la bague 30 lors du montage ou de la sortir du tube 50 lors du démontage.

De manière particulièrement avantageuse et comme illustré en figure 11, on prévoit que :
- La paroi externe de la bague 30 soit inclinée. La bague présente ainsi au moins une surface externe conique 34.
- La paroi interne de l'orifice 55 de collecte, c'est-à-dire sur cet exemple la paroi interne 54 du tube 50, présente une inclinaison correspondant à l'inclinaison de la paroi externe 34 de la bague 30.

Ainsi, la section du passage de fuite prise transversalement, varie en fonction de la position verticale de la bague 30 à l'intérieur du tube 50.

Sur l'exemple illustré en figure 11, la surface conique 34 de la bague 30 et la section de passage se rétrécissent en direction du bas. Sur cette figure, les inclinaisons et la section du passage de fuite 80 sont exagérées pour faciliter la compréhension.

Ainsi, lorsque l'on descend la tige 12 dans le tube 50, par exemple sous l'effet d'une dilatation à chaud de la gaine 110, la section de passage de fuite diminue.

A l'inverse, lorsque la tige 12 remonte dans le tube 50, par exemple sous l'effet d'une rétractation de la gaine, c'est-à-dire à froid, la section du passage de fuite augmente.

On notera également que ce principe est applicable au cas où la bague 30 est portée par le tube 50 et non pas par la tige 12 de la quille 10.

En fonction de l'inclinaison des parois en regard qui définissent la section de passage de fuite, on peut ainsi régler la section de passage de fuite en fonction de la dilatation de la gaine 110 et donc de la température.

Il est donc possible de faire varier cette section de manière à rendre constant le débit de fuite en utilisant la dilatation de la gaine 110. Le rendement de l'évaporateur est ainsi amélioré puisque l'on évite les bouchons de gaz non condensables tout en limitant le débit de fuite à ce qui est acceptable.

Pour des dilatations de 50 à 25 mm qui sont des valeurs attendues pour un polymère compte tenu de la longueur à froid des gaines et des températures de fonctionnement d'un évaporateur à plusieurs étages, le tableau suivant donne la réduction du jeu bague-tube en fonction de l'angle adopté pour l'inclinaison des parois.

| Angle (°) | Réduction du jeu pour 50 mm de dilatation (mm) | Réduction du jeu pour 25 mm de dilatation (mm) |
|---|---|---|
| 0 | 0 | 0 |
| 0.2 | 0.17 | 0.09 |
| 0.4 | 0.35 | 0.17 |
| 0.6 | 0.52 | 0.26 |
| 0.8 | 0.70 | 0.35 |
| 1.0 | 0.87 | 0.44 |

Ainsi, on peut ainsi calibrer très finement le jeu de fuite. L'angle donné à la paroi interne 54 du tube 50 et à la paroi externe 34 de la bague 30 permet de faire varier automatiquement le jeu de fuite en fonction de la température. Cet angle peut être orienté dans un sens ou dans l'autre pour augmenter ou diminuer le jeu de fuite ce qui présente un avantage appréciable.

En effet, en inversant l'angle du tube et de la bague, on peut augmenter le jeu de fuite quand la gaine se dilate au lieu de le réduire. On introduit alors un degré de liberté supplémentaire pour calibrer la fuite de vapeur en fonction de la température et de l'écart de pression qui intervient dans la valeur de cette fuite.

De manière avantageuse, afin d'éviter que la jupe 40 ne flotte sur la solution accumulée sur le fond de la plaque inférieure 108, on prévoit au moins un canal traversant la paroi de la jupe 40. De préférence, ce canal 70 est un perçage pratiqué en haut de la portion inférieure 49 de la jupe 40, c'est-à-dire à proximité de la portion supérieure 48. Ce canal 70 est visible en figure 5. L'air présent au sein de la jupe 40 peut ainsi s'échapper, pour équilibrer les pressions à l'intérieur et à l'extérieur de la jupe et pour laisser monter la solution sans risque de flottaison de la jupe 40. On évite ainsi que la jupe 40 se désemboîte de la quille 10, en cas de remontée de la solution concentrée.

De préférence, le canal traversant 70 est un perçage incliné qui remonte vers le haut à travers la paroi de la jupe 40 et en direction de l'intérieur de la jupe 40. Cela permet d'éviter que le deuxième fluide qui s'écoule sur la paroi externe de la jupe 40 ne parvienne à l'intérieur de la jupe en empruntant le canal 70. De préférence, le perçage est incliné à 45°. L'inclinaison et le nombre de canaux 70 peuvent être librement adaptés.

Au vu de la description qui précède, il apparaît clairement que l'invention, notamment le dispositif de connexion fluidique présente les avantages suivants:
- Maintien des gaines 110 dans une position verticale, à l'aplomb de l'évacuation de condensats vers une boite de collecte telle que la chambre de collecte 142.
- Tension de la gaine 110 sous l'effet de son propre poids, du poids du film 114 d'eau qui ruisselle sur les faces internes 111 et externes 112, du poids de la quille 10 et de la jupe 40 et enfin de l'effet de fond correspondant à l'écart de pression ; l'effet de fond.
- Libre dilatation de chacune des gaines 110, de manière individuelle, sans remettre en cause les différentes fonctions notamment de conduction du condensat, d'étanchéité entre les premier et deuxième fluides à l'état liquide; la dilatation peut atteindre plusieurs pour cent.
- Evacuation du condensat formé à l'intérieur des gaines vers une boite de collecte, sans que celui-ci puisse s'échapper du côté où la pression est inférieure.
- Blocage du passage de la saumure vers le circuit des condensats,
- Création d'une fuite calibrée, donc contrôlée, de vapeur de chauffe vers le circuit saumure de manière à balayer convenablement les gaz incondensables, gaine 110 par gaine 110.
- Blocage de la partie mobile de la quille 10 à l'intérieur du tube 50 en position haute pour éviter son déboîtement, lors du transport par exemple ou suite à un écart brutal de pression.

Enfin les différentes pièces du dispositif de connexion fluidique en particulier la quille 10, la jupe 40 sont simples et peu onéreuses à fabriquer par moulage par injection par exemple.

De préférence toutes les pièces (la quille 10, jupe 40, bague 30, tube 50) sont en thermoplastique injecté ce qui permet de réduire leur coût d'obtention. Elles peuvent être en n'importe quel autre matériau, mis en forme par injection ou par usinage.

Selon un mode de réalisation particulier non illustré sur les figures on constitue un bourrelet sur l'extrémité de la gaine 110 pour bloquer celle-ci en cas de glissement. On peut pour cela réaliser le bourrelet par un système chauffant escamotable. Le moyen de chauffage est soit rayonnant soit une surface chaude avec revêtement anti-adhésif venant au contact de la matière à fondre.

La présente invention trouve pour application particulièrement avantageuse les procédés de concentration par évaporation en général et plus particulièrement les procédés de concentration d'eau de mer pour en extraire de l'eau douce. Elle présente pour avantage d'offrir de bons rendements même avec des températures et des pressions de fonctionnement relativement basses.

L'invention n'est pas limitée aux modes de réalisations précédemment décrits et s'étend à tous les modes de réalisation couverts par les revendications.

## Revendications

1. Echangeur (1) de chaleur comprenant au moins :
- une gaine (110), s'étendant principalement selon un axe vertical, formée au moins d'un matériau polymère, l'échangeur étant destiné à faire circuler à l'intérieur de la gaine (110) un premier fluide en partie au moins sous forme de vapeur et pour transférer une partie au moins de la chaleur du premier fluide à un deuxième fluide s'écoulant sur une paroi externe de la gaine (110), ce transfert de chaleur produisant une condensation d'une partie au moins du premier fluide sur la paroi interne de la gaine (110) et une évaporation d'une partie au moins du deuxième fluide;
- un tube (50) présentant un orifice (55) verticalement situé sous une extrémité inférieure de la gaine (110) et configuré pour récupérer le premier fluide ayant condensé à l'intérieur de la gaine (110) ;
- un dispositif de connexion fluidique entre la gaine (110) et le tube (50), le dispositif de connexion fluidique comprenant au moins une quille (10) présentant une extrémité supérieure (15) solidaire de l'extrémité inférieure de la gaine (110) ; une extrémité inférieure (16) insérée dans l'orifice (55) du tube (50); un canal (20) interne s'étendant entre lesdites extrémités supérieure (15) et inférieure (16) et configuré pour collecter le premier fluide condensé en sortie de gaine (110) et le guider jusque dans le tube (50);
l'échangeur étant configuré pour permettre un déplacement relatif entre la quille (10) et le tube (50), selon l'axe d'extension principale de la gaine (110) ;
**caractérisé en ce que** le dispositif de connexion fluidique comprend une bague (30) rapportée sur une pièce prise parmi la quille (10) et le tube (50), la bague (30) étant configurée pour définir avec l'autre parmi la quille (10) et le tube (50) un passage de fuite (80) pour l'évacuation hors du tube (50) et hors de la quille (10) d'une partie du premier fluide non condensé provenant de l'extrémité inférieure (16) de la quille (10).

2. Echangeur (1) selon la revendication précédente dans lequel la quille (10) et le tube (50) son configurés pour permettre une translation verticale de la quille (10) à l'intérieur du tube (50) sous l'effet de la dilatation de la gaine (110).

3. Echangeur (1) selon l'une quelconque des revendications précédentes dans lequel la bague (30) et l'autre parmi ladite pièce prise parmi la quille (10) et le tube (50) sur laquelle est rapportée la bague (30) présentent des parois en regard qui sont inclinées et qui présentent sensiblement la même inclinaison.

4. Echangeur (1) selon la revendication précédente dans lequel lesdites parois en regard sont inclinées de manière à ce qu'un allongement de la gaine sous l'effet d'une dilatation thermique ou du fluage provoque :
- une réduction de la section du passage de fuite (80)
- une augmentation de la section du passage de fuite (80).

5. Echangeur (1) selon l'une quelconque des revendications précédentes dans lequel :
- l'extrémité supérieure de la quille (10) est insérée dans l'extrémité inférieure de la gaine (110),
- et/ou dans lequel ladite pièce prise parmi la quille (10) et le tube (50) sur laquelle est rapportée la bague (30) comprend une gorge de réception de la bague (30),
- et/ou dans lequel la bague (30) et/ou ladite pièce prise parmi la quille (10) et le tube (50) sur laquelle est rapportée la bague (30) présente au moins une zone de déformation élastique pour faciliter l'emboitement par déformation radiale élastique de la bague (30) sur ladite pièce.

6. Echangeur (1) selon l'une quelconque des revendications précédentes dans lequel :
- la bague (30) comprend au moins une fente s'étendant sur une partie au moins de la hauteur de la bague (30), de manière à permettre par déformation élastique, une augmentation ou une réduction du diamètre de la bague (30),
- ou dans lequel la bague (30) forme un manchon en élastomère.

7. Echangeur (1) selon l'une quelconque des revendications précédentes dans lequel la bague (30) est rapportée sur la quille (10) et le passage de fuite (80) est défini par une paroi externe de la bague (30) et une paroi interne du tube (50).

8. Echangeur (1) selon l'une quelconque des revendications 1 à 5 dans lequel la bague (30) est rapportée sur le tube (50) et le passage de fuite (80) est défini par une paroi interne de la bague (30) et une paroi externe de la quille (10).

9. Echangeur (1) selon l'une quelconque des revendications précédentes dans lequel la gaine (110) présente une longueur d'au moins 2 et de préférence d'au moins 3 mètres et dans lequel la gaine (110) présente un diamètre externe compris entre 15 entre 60 millimètres (10⁻³ mètres) et de préférence entre 25 et 40 millimètres et de préférence de l'ordre de 30 millimètres et présente une épaisseur comprise entre 25 et 200 micromètres (10⁻⁶ mètres) et de préférence et 50 et 100 micromètres.

10. Echangeur (1) selon l'une quelconque des revendications précédentes comprenant une jupe (40) présentant un passage intérieur (46) et une extrémité supérieure qui coiffe à la fois l'extrémité inférieure de la gaine (110) et l'extrémité supérieure de la quille (10).

11. Echangeur selon la revendication précédente dans lequel :
- la jupe (40) s'étend le long du canal (20) interne de la quille (10) sur au moins un quart et de préférence au moins un tiers de la longueur du canal (20) interne,
- et/ou dans lequel la jupe (40) présente un diamètre extérieur au moins deux et de préférence au moins trois fois supérieur à celui de la tige (12) de la quille (10).

12. Ensemble comprenant un échangeur selon l'une quelconque des revendications précédente et un jeu de bagues (30) présentant des diamètres externes ou internes différents.

13. Utilisation d'un échangeur selon l'une quelconque des revendications 1 à 11 pour dessaler de l'eau salée.

14. Évaporateur (100) de solution comprenant une pluralité d'échangeurs (1) selon l'une quelconque des revendications 1 à 11, la pluralité d'échangeurs (1) formant de préférence un faisceau ou un film d'échangeurs (1) et comprenant une enceinte (101) définissant avec la paroi externe de la gaine (110) une chambre d'évaporation (141) et définissant avec une plaque inférieure (108) fluidiquement connectée au tube (50) une chambre de collecte (142) du premier fluide condensé, l'évaporateur étant configuré de manière à ce que le deuxième fluide soit un liquide qui s'écoule par gravité sous forme d'un film (114) le long de la paroi externe de la gaine (110).

15. Système de concentration de solution comprenant une pluralité d'évaporateurs (100) selon la revendication précédente, dans lequel les évaporateurs (100) sont de préférence disposés en série de manière à ce qu'une sortie sous forme de vapeur du deuxième fluide d'un premier évaporateur (100) soit injectée comme premier fluide dans un deuxième évaporateur (100) monté en série avec le premier évaporateur (100).

## Patentansprüche

1. Wärmetauscher (1), der mindestens umfasst:
- eine sich im Wesentlichen entlang einer vertikalen Achse erstreckende Hülse (110), die aus mindestens einem Polymermaterial gebildet ist, wobei der Tauscher dazu bestimmt ist, im Inneren der Hülse (110) ein erstes Fluid mindestens zum Teil in Form von Dampf zirkulieren zu lassen, und dafür, mindestens einen Teil der Wärme des ersten Fluids auf ein zweites Fluid zu übertragen, das an einer Außenwand der Hülse (110) fließt, wobei diese Wärmeübertragung ein Kondensieren mindestens eines Teils des ersten Fluids an der Innenwand der Hülse (110), und ein Verdampfen mindestens eines Teils des zweiten Fluids erzeugt;
- ein Rohr (50), das eine Öffnung (55) aufweist, die vertikal unter einem unteren Ende der Hülse (110) liegt und dafür konfiguriert ist, das erste Fluid, das im Inneren der Hülse (110) kondensiert ist, zurückzugewinnen;
- eine Fluidverbindungsvorrichtung zwischen der Hülse (110) und dem Rohr (50), wobei die Fluidverbindungsvorrichtung mindestens einen Kiel (10) umfasst, der ein oberes Ende (15) aufweist, das fest mit dem unteren Ende der Hülse (110) verbunden ist; ein unteres Ende (16), das in die Öffnung (55) des Rohrs (50) eingefügt ist; einen Innenkanal (20), der sich zwischen dem oberen (15) und unteren Ende (16) erstreckt und dafür konfiguriert ist, das kondensierte erste Fluid am Ausgang von Hülse (110) zu sammeln und es bis in das Rohr (50) zu leiten;
wobei der Tauscher dafür konfiguriert ist, eine relative Verschiebung zwischen dem Kiel (10) und dem Rohr (50) entlang der Haupterstreckungsachse der Hülse (110) zu ermöglichen;
**dadurch gekennzeichnet, dass** die Fluidverbindungsvorrichtung einen Ring (30) umfasst, der an einem Teil, ausgewählt aus dem Kiel (10) und dem Rohr (50), angebracht ist, wobei der Ring (30) dafür konfiguriert ist, mit dem anderen aus dem Kiel (10) und dem Rohr (50) eine Leckagebohrung (80) für das Ableiten eines Teils des nicht kondensierten ersten Fluids, der vom unteren Ende (16) des Kiels (10) stammt, aus dem Rohr (50) und aus dem Kiel (10) heraus zu definieren.

2. Tauscher (1) nach dem vorstehenden Anspruch, wobei der Kiel (10) und das Rohr (50) dafür konfiguriert sind, eine vertikale Translation des Kiels (10) im Inneren des Rohrs (50) unter der Wirkung der Ausdehnung der Hülse (110) zu ermöglichen.

3. Tauscher (1) nach einem der vorstehenden Ansprüche, wobei der Ring (30) und das andere aus dem Teil, ausgewählt aus dem Kiel (10) und dem Rohr (50), an dem der Ring (30) angebracht ist, gegenüberliegende Wände aufweisen, die geneigt sind und die im Wesentlichen dieselbe Neigung aufweisen.

4. Tauscher (1) nach dem vorstehenden Anspruch, wobei die gegenüberliegenden Wände so geneigt sind, dass eine Verlängerung der Hülse unter der Wirkung einer Wärmeausdehnung oder des Kriechens bewirkt:
- eine Verkleinerung des Querschnitts der Leckagebohrung (80),
- eine Vergrößerung des Querschnitts der Leckagebohrung (80).

5. Tauscher (1) nach einem der vorstehenden Ansprüche, wobei:
- das obere Ende des Kiels (10) in das untere Ende der Hülse (110) eingefügt ist,
- und/oder wobei das Teil, ausgewählt aus dem Kiel (10) und dem Rohr (50), an dem der Ring (30) angebracht ist, eine Kehle zum Aufnehmen des Rings (30) umfasst,
- und/oder wobei der Ring (30) und/oder das Teil, ausgewählt aus dem Kiel (10) und dem Rohr (50), an dem der Ring (30) angebracht ist, mindestens eine elastische Verformungszone aufweist, um das Ineinanderpassen durch elastische radiale Verformung des Rings (30) an dem Teil zu erleichtern.

6. Tauscher (1) nach einem der vorstehenden Ansprüche, wobei:
- der Ring (30) mindestens einen Schlitz umfasst, der sich auf mindestens einem Teil der Höhe des Rings (30) erstreckt, um durch elastische Verformung eine Vergrößerung oder eine Verkleinerung des Durchmessers des Rings (30) zu ermöglichen,
- oder wobei der Ring (30) eine Elastomermanschette bildet.

7. Tauscher (1) nach einem der vorstehenden Ansprüche, wobei der Ring (30) am Kiel (10) angebracht ist, und die Leckagebohrung (80) von einer Außenwand des Rings (30) und einer Innenwand des Rohrs (50) definiert wird.

8. Tauscher (1) nach einem der Ansprüche 1 bis 5, wobei der Ring (30) am Rohr (50) angebracht ist, und die Leckagebohrung (80) von einer Innenwand des Rings (30) und einer Außenwand des Kiels (10) definiert wird.

9. Tauscher (1) nach einem der vorstehenden Ansprüche, wobei die Hülse (110) eine Länge von mindestens 2, und vorzugsweise mindestens 3 Meter aufweist, und wobei die Hülse (110) einen Außendurchmesser im Bereich zwischen 15 und 60 Millimeter (10⁻³ Meter), und vorzugsweise zwischen 25 und 40 Millimeter, und vorzugsweise in der Größenordnung von 30 Millimeter aufweist, und eine Dicke im Bereich zwischen 25 und 200 Mikrometer (10⁻⁶ Meter), und vorzugsweise und 50 und 100 Mikrometer aufweist.

10. Tauscher (1) nach einem der vorstehenden Ansprüche, der eine Schürze (40) umfasst, die eine Innenbohrung (46) und ein oberes Ende aufweist, das gleichzeitig das untere Ende der Hülse (110) und das obere Ende des Kiels (10) bedeckt.

11. Tauscher nach dem vorstehenden Anspruch, wobei:
- sich die Schürze (40) entlang des Innenkanals (20) des Kiels (10) auf mindestens einem Viertel, und vorzugsweise mindestens einem Drittel der Länge des Innenkanals (20) erstreckt,
- und/oder wobei die Schürze (40) einen Außendurchmesser aufweist, der mindestens zwei-, und vorzugsweise mindestens dreimal größer ist als derjenige des Schafts (12) des Kiels (10).

12. Baugruppe, die einen Tauscher nach einem der vorstehenden Ansprüche und einen Satz Ringe (30) umfasst, die unterschiedliche Außen- oder Innendurchmesser aufweisen.

13. Verwendung eines Tauschers nach einem der Ansprüche 1 bis 11, um Salzwasser zu entsalzen.

14. Lösungsverdampfer (100), der eine Vielzahl von Tauscher (1) nach einem der Ansprüche 1 bis 11 umfasst, wobei die Vielzahl von Tauschern (1) vorzugsweise ein Bündel oder einen Film von Tauschern (1) bildet und ein Gehäuse (101) umfasst, das mit der Außenwand der Hülse (110) eine Verdampfungskammer (141) definiert, und mit einer unteren Platte (108), die mit dem Rohr (50) fluidverbunden ist, eine Kammer zum Sammeln (142) des kondensierten ersten Fluids definiert, wobei der Verdampfer so konfiguriert ist, dass das zweite Fluid eine Flüssigkeit ist, die durch Schwerkraft in Form eines Films (114) der Außenwand der Hülse (110) entlang fließt.

15. System zum Konzentrieren einer Lösung, das eine Vielzahl von Verdampfern (100) nach dem vorstehenden Anspruch umfasst, wobei die Verdampfer (100) vorzugsweise so in Reihe angeordnet sind, dass ein Ausgang in Form von Dampf des zweiten Fluids eines ersten Verdampfers (100) als erstes Fluid in einen zweiten Verdampfer (100) eingespritzt wird, der mit dem ersten Verdampfer (100) in Reihe montiert ist.

## Claims

1. Heat exchanger comprising at least:
- a sleeve (110), extending mainly along a vertical axis, formed at least of one polymer, the exchanger being intended to make a first fluid partially in the form of steam circulate inside the sleeve (110), and to transfer at least some of the heat from the first fluid to a second fluid flowing on an outer wall of the sleeve (110), this heat transfer producing a condensation of at least some of the first fluid on the inner wall of the sleeve (110) and an evaporation of at least some of the second fluid;
- a tube (50) having an orifice (55) vertically situated under a lower end of the sleeve (110) and configured to recover the first fluid having condensed inside the sleeve (110);
- a device for fluidically connecting between the sleeve (110) and the tube (50), the fluidic connection device comprising at least one pin (10) having an upper end (15) secured to the lower end of the sleeve (110); a lower end (16) inserted into the orifice (55) of the tube (50); an inner channel (20) extending between said upper (15) and lower (16) ends and configured to collect the first condensed fluid exiting the sleeve (110) and to guide it up into the tube (50);
the exchanger being configured to allow for a relative movement between the pin (10) and the tube (50) along the main axis of extension of the sleeve (110);
**characterised in that** the fluidic connection device comprises a ring (30) returned on a part taken from among the pin (10) and the tube (50), the ring (30) being configured to define with the other from among the pin (10) and the tube (50), a leakage passage (80) for the evacuation outside of the tube (50) and outside of the pin (10) of some of the first non-condensed fluid coming from the lower end (16) of the pin (10).

2. Exchanger (1) according to the preceding claim, wherein the pin (10) and the tube (50) are configured to make it possible for a vertical translation of the pin (10) inside the tube (50) under the effect of the dilatation of the sleeve (110).

3. Exchanger (1) according to any one of the preceding claims, wherein the ring (30) and the other from among said part taken from among the pin (10) and the tube (50) on which the ring (30) is returned have facing walls which are inclined and which have substantially the same inclination.

4. Exchanger (1) according to the preceding claim, wherein said facing walls are inclined such that an extension of the sleeve under the effect of a thermal dilatation or of the creep causes:
- a reduction of the cross-section of the leakage passage (80),
- an increase of the cross-section of the leakage passage (80).

5. Exchanger (1) according to any one of the preceding claims, wherein:
- the upper end of the pin (10) is inserted into the lower end of the sleeve (110),
- and/or wherein said part taken from among the pin (10) and the tube (50) on which the ring (30) is returned comprises a groove for receiving the ring (30),
- and/or wherein the ring (30) and/or said part taken from among the pin (10) and the tube (50) on which the ring (30) is returned has at least one elastic deformation zone to facilitate the interlocking by elastic radial deformation of the ring (30) on said part.

6. Exchanger (1) according to any one of the preceding claims, wherein:
- the ring (30) comprises at least one slot extending over at least some of the height of the ring (30), so as to make it possible by elastic deformation, for an increase or a reduction of the diameter of the ring (30),
- or wherein the ring (30) forms an elastomer sleeve.

7. Exchanger (1) according to any one of the preceding claims, wherein the ring (30) is returned on the pin (10) and the leakage passage (80) is defined by an outer wall of the ring (30) and an inner wall of the tube (50).

8. Exchanger (1) according to any one of claims 1 to 5, wherein the ring (30) is returned on the tube (50) and the leakage passage (80) is defined by an inner wall of the ring (30) and an outer wall of the pin (10).

9. Exchanger (1) according to any one of the preceding claims, wherein the sleeve (110) has a length of at least 2 and preferably of at least less than 3 metres and wherein the sleeve (110) has an outer diameter of between 15 and 60 millimetres (10⁻³ metres) and preferably between 25 and 40 millimetres and preferably of around 30 millimetres and has a thickness of between 25 and 200 micrometres (10⁻⁶ metres) and preferably between 50 and 100 micrometres.

10. Exchanger (1) according to any one of the preceding claims comprising a skirt (40) having an inner passage (46) and an upper end which curls both the lower end of the sleeve (110) and the upper end of the pin (10).

11. Exchanger according to the preceding claim, wherein:
- the skirt (40) extends along the inner channel (20) of the pin (10) over at least one quarter and preferably at least one third of the length of the inner channel (20),
- and/or wherein the skirt (40) has an outer diameter at least two and preferably at least three times greater than that of the rod (12) of the pin (10).

12. Assembly comprising an exchanger according to any one of the preceding claims and a set of rings (30) having different outer or inner diameters.

13. Use of an exchanger according to any one of claims 1 to 11 to desalinise salted water.

14. Solution evaporator (100) comprising a plurality of exchangers (1) according to any one of claims 1 to 11, the plurality of exchangers (1) preferably forming a cluster of a film of exchangers (1) and comprising an enclosure (101) defining with the outer wall of the sleeve (110), an evaporation chamber (141) and defining with a lower plate (108) fluidically connected to the tube (50), a chamber for collecting (142) the first condensed fluid, the evaporator being configured such that the second fluid is a liquid which flows by gravity in the form of a film (114) along the outer wall of the sleeve (110).

15. Solution concentration system comprising a plurality of evaporators (100) according to the preceding claim, wherein the evaporators (100) are preferably arranged in series such that an outlet in steam form of the second fluid of a first evaporator (100) is injected as a first fluid into a second evaporator (100) mounted in series with the first evaporator (100).
